# FASCICULE DE BREVET EUROPEEN

(11) **EP 2 955 109 B1**
(45) Date de publication et mention de la délivrance du brevet: **22.03.2017**
(21) Numéro de dépôt: 15171287.4
(22) Date de dépôt: 09.06.2015
(51) Int. Cl.: B64C 25/40

(54) **ROUE D'AÉRONEF ÉQUIPÉE DE MOYENS DE SON ENTRAÎNEMENT EN ROTATION PAR UN ACTIONNEUR D'ENTRAÎNEMENT**
RAD EINES LUFTFAHRZEUGS, DAS MIT MITTELN ZU SEINEM ANTRIEB DURCH EINEN EXTERNEN ANTRIEB AUSGESTATTET IST
AIRCRAFT WHEEL PROVIDED WITH MEANS FOR ROTATING SAME BY A DRIVE ACTUATOR

(30) Priorité: 13.06.2014 FR 1455450
(43) Date de publication de la demande: 16.12.2015
(73) Titulaire: Safran Landing Systems, 78140 Vélizy-Villacoublay (FR)
(72) Inventeur: Mazarguil, Nicolas, 78140 Vélizy-Villacoublay (FR); Remond, Sébastien, 78140 Vélizy-Villacoublay (FR)
(74) Mandataire: Parzy, Benjamin Alain

(56) Documents cités:
- EP-A1- 2 746 611
- EP-A1- 2 803 569
- EP-A2- 2 639 160
- FR-A1- 2 990 188

## Description

L'invention concerne une roue d'aéronef équipée de moyens de son entraînement en rotation par un actionneur d'entraînement.

### ARRIERE-PLAN TECHNOLOGIQUE DE L'INVENTION

Il a été récemment reconnu l'avantage de motoriser les roues d'un aéronef pour pouvoir déplacer celui-ci sans l'aide de ses propulseurs. A cet égard, on connaît des roues d'aéronef munies de moyens de leur entraînement en rotation par un actionneur d'entraînement rapporté sur la partie basse de l'atterrisseur. Ces moyens d'entraînement comprennent une couronne dentée ramenée de façon rigide sur la jante de la roue. Récemment, il a été proposé dans le document EP 2 639 160 d'atteler une couronne dentée à une jante de roue par l'intermédiaire d'organes d'attelage présentant des jeux aptes à permettre un mouvement relatif entre la couronne dentée et la jante de la roue. La couronne dentée est rapportée sur des chapes s'étendant d'un flanc d'une jante de la roue. Ces dispositions nécessitent de fabriquer des roues spécifiques qui doivent être certifiées pour être utilisables sur des aéronefs déjà en service.

### OBJET DE L'INVENTION

L'invention a pour objet une roue d'aéronef munie de moyens de son entraînement en rotation rapporté sur la roue, de construction simplifiée.

### PRESENTATION DE L'INVENTION

En vue de la réalisation de ce but, on propose une roue d'aéronef pourvue de moyens d'entraînement en rotation, les moyens d'entraînement comportant une couronne d'entraînement associée à des moyens d'attelage de la couronne à une jante de la roue, dans laquelle, selon l'invention, les moyens d'attelage sont fixés à la jante en utilisant des organes de fixation introduits dans des orifices de la jante s'étendant à l'extrémité de barrettes de la jante qui servent par ailleurs à maintenir des écrans thermiques de protection de la jante.

Ainsi, on profite de l'existence, sur les roues freinées d'orifices qui servent à maintenir les écrans thermiques pour protéger la jante et les barrettes de frein (ces éléments servent à solidariser en rotation la jante de la roue et les disques rotors du frein) pour y rapporter les moyens d'attelage de la couronne, de sorte qu'il est possible d'utiliser des roues existantes sans modification ni effort particulier de certification, car l'introduction du couple d'entraînement en rotation dans la roue se fait sensiblement au même niveau que l'introduction du couple de freinage, et le couple d'entraînement est bien moins important que le couple de freinage qui dimensionne la roue.

Selon un mode particulier de réalisation de l'invention, la couronne d'entraînement comporte un plateau qui est rapporté sur la jante au moyen des organes d'attelage. De préférence, le plateau est réalisé en un matériau de même souplesse que celui de la jante pour en suivre les déformations. Des obstacles sont alors rapportés sur le plateau pour former des dents d'entraînement de la roue en rotation.

### PRESENTATION DES FIGURES

L'invention sera mieux comprise à la lumière de la description qui suit d'un mode particulier de réalisation non limitatif de l'invention, en référence aux figures des dessins annexés parmi lesquelles :
- la figure 1 est une vue en perspective écorchée partielle d'une jante de roue d'aéronef montrant l'attelage des moyens d'entraînement selon un premier mode de réalisation de l'invention ;

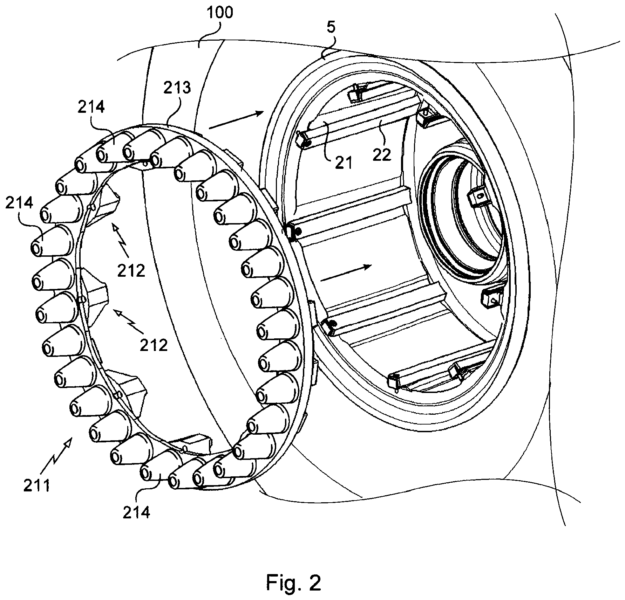

- la figure 2 est une vue analogue à celle de la figure 1 montrant l'assemblage des moyens d'entraînement
   - à la jante de la figure 1 ;

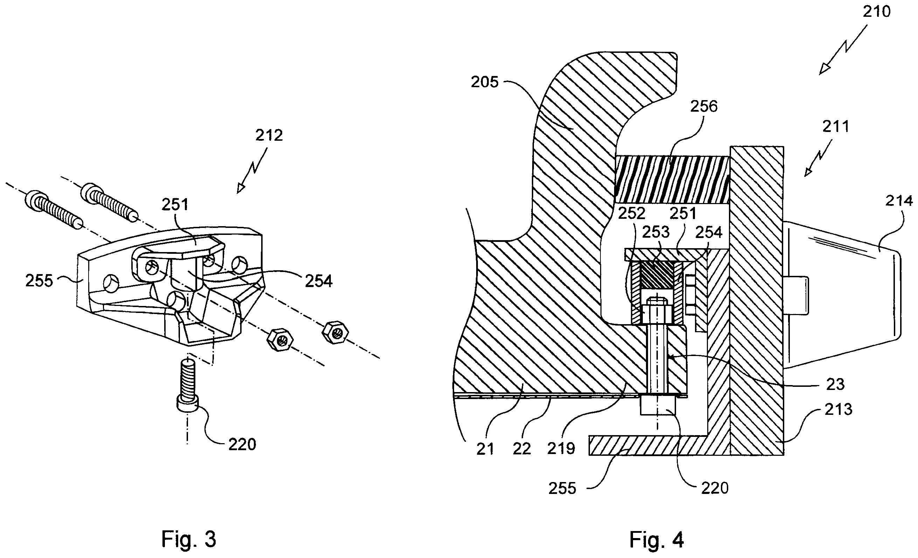

- la figure 3 est une vue en perspective de l'un des organes d'attelage de la figure 2 ;
- la figure 4 est une vue en coupe du support de la figure 3 en place sur la jante.

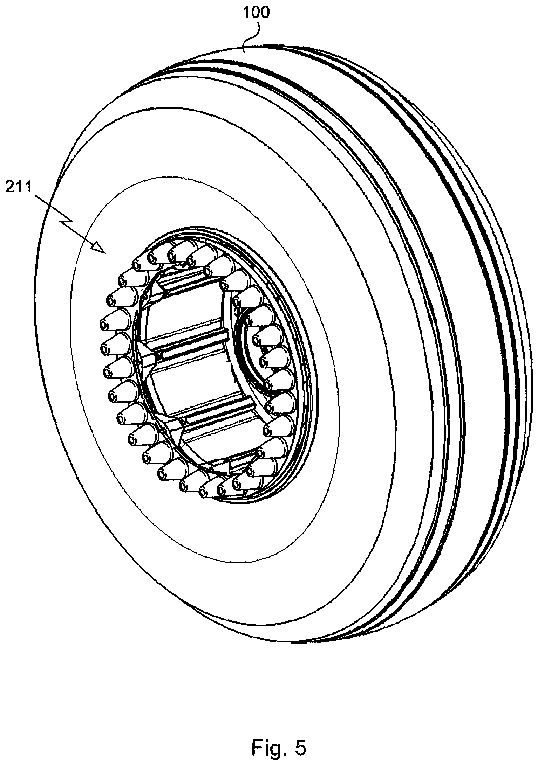

- la figure 5 est une vue en perspective de la roue équipée de ses moyens d'entraînement.

### DESCRIPTION DETAILLEE DE MODES DE REALISATION DE L'INVENTION

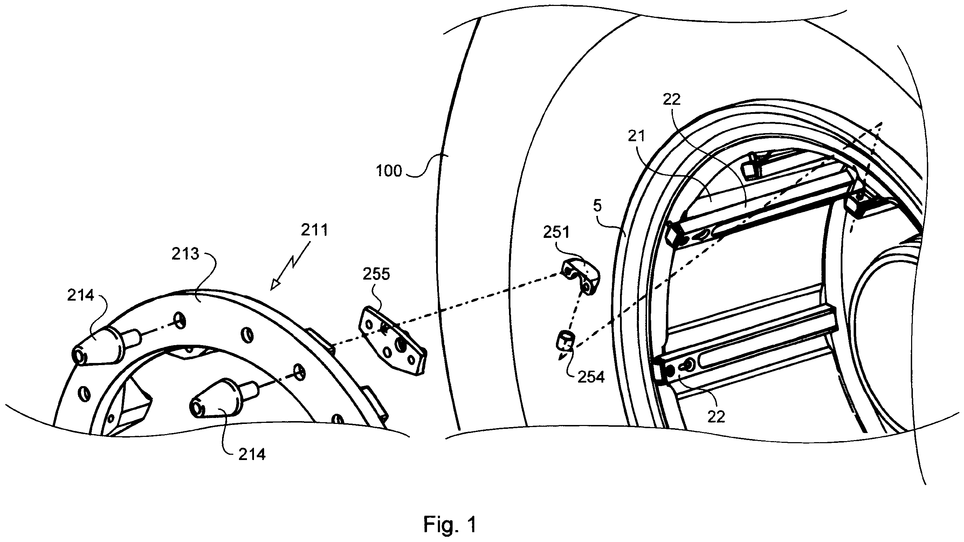

A la figure 1 est illustrée une jante 5 de roue d'aéronef destinée à recevoir un pneumatique 100, ainsi que des disques d'un frein (non représenté). Les disques s'étendent à l'intérieur de la jante, et certains de ces disques (les disques rotors) sont entraînés en rotation avec la jante par l'intermédiaire de barrettes 21, qui sont ici recouvertes d'écrans de protection thermique 22.

La roue est équipée de moyens d'entraînement en rotation 210 qui comportent ici une couronne dentée rigide 211. On interpose un organe d'attelage 212 indépendant entre la jante et les moyens d'entraînement en rotation 210, ici une couronne d'entraînement 211 comprenant un plateau annulaire 213 sur lequel des obstacles 214 sont rapportés pour former des dents d'entraînement. Ici, l'organe d'attelage comporte une bride 251 qui est associée à un écrou 252 destiné à recevoir une vis 220 qui sert par ailleurs à maintenir l'un des écrans thermiques 22. La vis 220 est engagée dans un orifice 23 ménagé au travers d'une extrémité de la barrette 21. Ici, l'écrou 252 est associé à la bride 251 par un silent-bloc 253 qui est intégré dans une entretoise 254.

L'organe d'attelage comporte en outre une platine 255 qui est rapportée sur la bride 251 par deux vis. La platine 255 comporte une face latérale qui est destinée à recevoir le plateau 213. La platine 255 comporte un capotage
protégeant l'extrémité de la barrette de frein.

Une fois la jante équipée de ses platines, il reste alors à rapporter sur les platines 255 le plateau 213. Au montage du plateau 213 sur les platines 255, des butées élastomères 256 sont interposées entre la couronne dentée 211 et la jante 205 à l'aplomb des platines 255 pour amortir les efforts axiaux subis par la couronne d'entraînement.

Dans l'exemple illustré ici, la couronne dentée des moyens d'entraînement est destinée à coopérer avec un pignon d'entraînement d'un organe d'actionnement porté par l'atterrisseur sur laquelle la roue est montée pour tourner.

De préférence le plateau 213 est réalisé dans un matériau de même souplesse que celui de la jante (par exemple en alliage d'aluminium si la jante est elle-même en alliage d'aluminium). Ainsi, le plateau peut suivre les déformations de la jante sans surcontraindre celle-ci. La fixation des moyens d'entraînement au en utilisant des organes de fixation servant par ailleurs à maintenir les écrans de protection thermiques de barrettes de frein permet l'utilisation de jantes standards, déjà certifiées, sans aucune modification. De plus, si de nouvelles jantes doivent être créées, l'invention permet une simplification certaine de la jante comparée à celle du document EP 2 639 160 par la suppression du nombre de chapes de fixation spécifiques.

L'invention n'est pas limitée à ce qui vient d'être décrit, mais englobe au contraire toute variante entrant dans le cadre défini par les revendications.

## Revendications

1. Roue d'aéronef ayant une jante (5, 205) et étant pourvue de moyens d'entraînement en rotation (210) qui comportent une couronne d'entraînement (211) associée à des organes d'attelage (212) de la couronne d'entraînement à la jante de la roue, les organes d'attelage étant fixés à la jante par des organes de fixation (220) introduits dans des orifices (23) de la jante, la roue étant **caractérisée en ce que** la jante (5, 205) comporte des barrettes (21) d'entraînement de disques de freins, les orifices (23) s'étendent à l'extrémité des barrettes de la jante, et les organes de fixation (220) servent par ailleurs à maintenir des écrans de protection thermique (22) de la jante.

2. Roue d'aéronef selon la revendication 1, dans laquelle l'organe de fixation comprend une vis (220) qui s'étend pour maintenir à la fois l'un des organes d'attelage de la couronne d'entraînement et un écran thermique

3. Roue d'aéronef selon la revendication 1, dans laquelle la couronne d'entraînement (211) comporte un plateau (213) annulaire et les organes d'attelage (221) étant solidarisés au plateau et rapportés sur la jante.

4. Roue d'aéronef selon la revendication 3, dans laquelle chaque organe d'attelage comporte une bride (251) fixée sur la jante par un des organes de fixation (220), la bride (251) portant une platine (255) sur laquelle est rapporté le plateau (213) annulaire.

5. Roue selon la revendication 4, dans laquelle le plateau (213) annulaire est rapporté sur les platines (255) des organes d'attelage avec interposition de butées élastomères (256) entre le plateau (213) et la jante.

6. Roue d'aéronef selon la revendication 3, dans lequel le plateau (213) annulaire est réalisé dans un matériau de même souplesse que celui de la jante pour suivre les déformations de celle-ci.

7. Roue d'aéronef selon la revendication 3, dans lequel le plateau porte une série d'obstacles (214) amovibles formant des dents d'entraînement de la jante en rotation.

## Patentansprüche

1. Luftfahrzeugrad, das eine Felge (5, 205) hat und mit Drehantriebsmitteln (210) versehen ist, die einen Antriebskranz (211) umfassen, der mit Kupplungselementen (212) zum Kuppeln des Antriebskranzes an die Felge des Rades verbunden ist, wobei die Kupplungselemente an der Felge über in Öffnungen (23) der Felge eingefügte Befestigungselemente (220) befestigt sind, wobei das Rad **dadurch gekennzeichnet ist, dass** die Felge (5, 205) Bremsscheibenantriebleisten (21) umfasst, sich die Öffnungen (23) am Ende der Leisten der Felge erstrecken und die Befestigungselemente (220) ferner dazu dienen, Wärmeschutzschilder (22) zum Schutz der Felge zu halten.

2. Luftfahrzeugrad nach Anspruch 1, bei dem das Befestigungselement eine Schraube (220) umfasst, die sich so erstreckt, dass sie gleichzeitig eines der Kupplungselemente zum Kuppeln des Antriebskranzes und ein Wärmeschutzschild hält.

3. Luftfahrzeugrad nach Anspruch 1, bei dem der Antriebskranz (211) eine Ringplatte (213) umfasst und die Kupplungselemente (221) fest mit der Platte verbunden und an der Felge befestigt sind.

4. Luftfahrzeugrad nach Anspruch 3, bei dem jedes Kupplungselement einen Flansch (251) umfasst, der an der Felge über eines der Befestigungselemente (220) befestigt ist, wobei der Flansch (251) eine Platte (255) trägt, an der die Ringplatte (213) befestigt ist.

5. Rad nach Anspruch 4, bei dem die Ringplatte (213) an den Platten (255) der Kupplungselemente unter Zwischenlage von elastomeren Anschlägen (256) zwischen der Platte (213) und der Felge befestigt ist.

6. Luftfahrzeugrad nach Anspruch 3, bei dem die Ringplatte (213) aus einem Material gleicher Flexibilität wie das der Felge hergestellt ist, um den Verformungen der Felge zu folgen.

7. Luftfahrzeugrad nach Anspruch 3, bei dem die Platte eine Reihe von abnehmbaren Hindernissen (214) trägt, die Antriebszähne zum Drehantrieb der Felge bilden.

## Claims

1. Aircraft wheel having a rim and being provided with rotational driving means (210) which comprise a drive gear (211) associated with coupling members (212) of the drive gear to the rim of the wheel, the coupling members being fixed to the rim by fixing members introduced into orifices (23) of the rim the wheel being **characterized in that** the rim comprise brake discs driving keys (21), the orifices (23) extend at an end of the keys and the fixing members are also used to hold heat shields protecting the rim.

2. Aircraft wheel according to claim 1, wherein the fixing member comprises a screw (220) which extends to hold both one of the coupling members of the drive gear and one of the heat shields.

3. Aircraft wheel according to claim 1, wherein the drive gear (211) comprises an annular disc (213) and the coupling members (212) are secured to the disc and the fixed to the rim.

4. Aircraft wheel according to claim 3, wherein each coupling member comprises a flange (251) secured to the rim by one of the fixing member (220), the flange (251) supporting a plate (255) on which is mounted the annular disc (213).

5. Aircraft wheel according to claim 4, wherein the annular disc (213) is mounted on the plates (255) of the coupling members with elastomer stops (256) interposed between the disc (213) and the rim.

6. Aircraft wheel according to claim 3, wherein the annular disc (213) is made in a material having the same flexibility as that of the rim, so that deformations in said rim can be followed.

7. Aircraft wheel according to claim 3, wherein the annular disc bears a series of removable protusions (214) forming the driving teeth of the rim during rotation.
